(19)

Europäisches Patentamt
European Patent Office
Office européen des brevets

(11) **EP 3 018 905 A1**

(12) **EUROPEAN PATENT APPLICATION**

(43) Date of publication:
**11.05.2016 Bulletin 2016/19**

(51) Int Cl.:
*H04N 19/107* (2014.01)    *H04N 19/136* (2014.01)
*H04N 19/182* (2014.01)

(21) Application number: **14306765.0**

(22) Date of filing: **04.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Gaedke, Klaus**
  **30659 Hannover (DE)**

• **Blawat, Meinolf**
  **30659 Hannover (DE)**
• **Huetter, Ingo**
  **30982 Pattensen (DE)**

(74) Representative: **Rittner, Karsten**
**Deutsche Thomson OHG**
**European Patent Operations**
**Karl-Wiechert-Allee 74**
**30625 Hannover (DE)**

(54) **Method and apparatus for selectively generating intra-/inter-frame prediction values of pixels of a frame of a sequence of image frames**

(57)    Intra-/inter-frame prediction values of pixels of a frame of a sequence of digital image frames are selectively generated, wherein the intra-prediction of still-picture compression is extended with a per pixel inter-prediction mode for pixels where the intra-prediction is less suitable. Prediction values for at least some of a plurality of pixels of the frame are generated, wherein for at least some pixels, individually for a pixel a corresponding individual mode evaluation result, which can be calculated at an encoder and recalculated at a decoder, is determined (23, 33) by evaluating a prediction mode decision criterion depending on a plurality of other pixels spatially neighboring said pixel. Depending on the evaluation result, a prediction value for the pixel is generated (24, 34) either from values of said other pixels spatially neighboring said pixel or from values of one or more pixels of at least one other frame.

Fig. 2

**Description**

**FIELD**

A method and an apparatus for selectively generating intra-/inter-frame prediction values of pixels, i.e. picture elements, of a frame of a sequence of digital image frames are presented. In particular, the present disclosure relates to a method and an apparatus for generating corresponding prediction values for at least some pixels of a plurality of pixels of a frame of a sequence of image frames, and to a corresponding computer readable storage medium.

**BACKGROUND**

For compression of video frames, two fundamental approaches exist: A frame is either compressed with references to available, i.e. already processed, stored or transmitted pixels of the same frame (intra-predicted frame) or with references to available pixels from at least one different frame of the sequence (inter-predicted frame). A sequence of image frames corresponds to any ordered set of related images, such as an image sequence in time, e.g. a video, a multi-view shot, i.e. more than one image shot at a same time, e.g. a light-field camera image holding multiple angles, or even a temporal sequence of multi-view shots.

Intra-frame prediction corresponds to the compression of still images where no references to other pictures are required. Data compression and decompression using intra-frame predictive coding requires only low complexity at encoder and decoder and generates only low latency. Therefore, this codec type is often used also for sequences of image frames, e.g. video sequences.

As an example, Motion JPEG defines an intra-frame video compression format in which each frame of a digital video sequence is compressed separately as a still image according to the JPEG standard.

Purely intra-frame predictive video coding schemes provide a quality that is not influenced by the motion within the video sequence and may provide a lossless coding mode corresponding to lossless still image coding schemes such as JPEG-LS, where the original image data can be perfectly reconstructed from the compressed data.

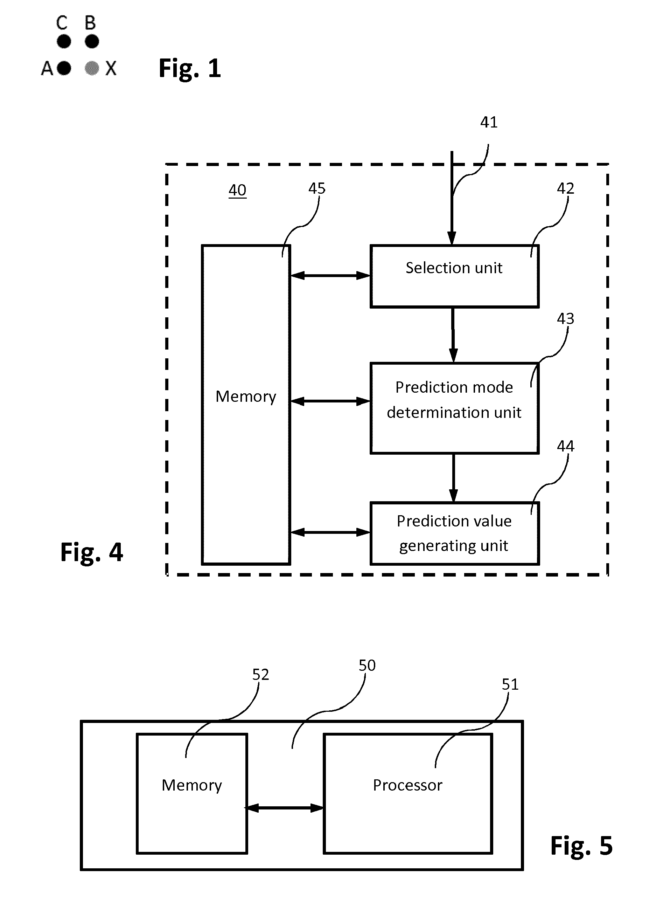

For example, in JPEG-LS, the value of a pixel $X$ can be predicted based on the values of three available, e.g. already transmitted, neighboring pixels $A, B,$ and $C$, as illustrated in Fig. 1. A Medium Edge Detector is used to determine the prediction value for $X$:

$$X = \begin{cases} \min(A, B) \; if \; C \geq \max(A, B) \\ \max(A, B) \; if \; C \leq \min(A, B) \\ A + B - C \; otherwise \end{cases} \qquad \text{Eq. 1}$$

This Medium Edge Detector tends to the following decisions: the first line tends to choose $B$ if a vertical edge is detected left from $X,$ the second line tends to choose $A$ if a horizontal edge is detected above $X,$ and $A + B - C$ is chosen if no edge is detected (flat region).

The decision how to predict $X$ from $A, B$ and $C$ taken at the encoder side does not have to be encoded, stored or transmitted to the decoder side. Instead, the decoder can recalculate it based on the values of $A, B$ and $C$ once they become available.

However, the compression gain is low compared to inter-frame prediction schemes, which are used, e.g., for video coding according to MPEG-2, H.264 and HEVC standards, where most of the compression gain can be achieved by exploiting the similarity of blocks of pixels between adjacent frames of the video sequence, often at the cost of an increased encoder complexity, whereas available intra-prediction modes provided by standards like H.264 require comparably complex encoders and decoders.

There remains a need for a method and an apparatus for compression of a sequence of image frames, that allow to improve the compression gain of a simple intra-frame coding scheme while keeping the encoder and decoder complexity low.

**SUMMARY**

A method and an apparatus for generating corresponding prediction values for at least some pixels of a plurality of pixels of a frame of a sequence of image frames, as well as a corresponding computer readable storage medium, according to the appended independent claims are suggested.

According to an aspect of the invention, a method for generating corresponding prediction values for at least some pixels of a plurality of pixels of a frame of a sequence of image frames comprises

for each of the at least some pixels,

- determining individually for a pixel a corresponding individual mode evaluation result by evaluating a prediction mode decision criterion depending on a plurality of other pixels of the frame, spatially neighboring said pixel, and
- depending on the mode evaluation result determined individually for said pixel, generating a corresponding prediction value for said pixel either from values of said plurality of other pixels spatially neighboring said pixel or from a value or values of one or more pixels of at least one other frame of the sequence.

Accordingly, an apparatus for generating corresponding prediction values for at least some pixels of a plurality of pixels of a frame of a sequence of image frames comprises

- a prediction mode determination unit configured to, for each of the at least some pixels,
- determine individually for a pixel a corresponding individual mode evaluation result by evaluating a prediction mode decision criterion depending on a plurality of other pixels of the frame, spatially neighboring said pixel; and
- a prediction value generating unit connected to receive, for each of the at least some pixels, the mode evaluation result determined individually for said pixel from the prediction mode determination unit and configured to,
- depending on the mode evaluation result determined individually for said pixel, generate a corresponding prediction value for said pixel either from values of said plurality of other pixels spatially neighboring said pixel or from a value or values of one or more pixels of at least one other frame of the sequence.

Units comprised in the apparatus, such as the prediction mode determination unit and the prediction value determination unit may, for example, be provided as separate devices, jointly as at least one device or logic circuitry, or functionality carried out by a microprocessor, microcontroller or other processing device, computer or other programmable apparatus.

According to another aspect of the invention, an apparatus for generating corresponding prediction values for at least some pixels of a plurality of pixels of a frame of a sequence of image frames comprises

- a processing device and
- a memory device storing instructions that, when executed, cause the apparatus to perform steps of the described method.

Further, a computer readable storage medium has stored therein instructions enabling generation of corresponding prediction values for at least some pixels of a plurality of pixels of a frame of a sequence of image frames which, when executed by a computer, cause the computer to: for each of the at least some pixels,

- determine individually for a pixel a corresponding individual mode evaluation result by evaluating a prediction mode decision criterion depending on a plurality of other pixels of the frame, spatially neighboring said pixel, and
- depending on the mode evaluation result determined individually for said pixel, generate a corresponding prediction value for said pixel either from values of said plurality of other pixels spatially neighboring said pixel or from a value or values of one or more pixels of at least one other frame of the sequence.

The computer readable storage medium tangibly embodies a program of instructions, which, when executed by a computer, cause the computer to perform the described method steps.

The generation of the corresponding prediction value for each of the pixels to be predicted, i.e. estimated, is carried out either intra-frame depending on values of spatially neighboring pixels of the same frame or inter-frame depending on a value or values of pixels of at least one other, e.g. temporarily neighboring, frame of the sequence, wherein the intra-/inter mode selection depends on the mode evaluation result, which is calculated per pixel, i.e. individually for each of the at least some pixels, i.e. the pixels to be predicted.

The term "depending on the mode evaluation result" refers to the dependence that when the mode evaluation result indicates that the evaluated prediction mode decision criterion, which is an intra-prediction criterion, is met, inter-prediction will be applied to the pixel value to be predicted, and intra-prediction otherwise. In another embodiment, depending on the definition of the prediction mode decision criterion, intra-prediction will be applied if the criterion is met, and inter-prediction otherwise.

The term "other frame of the sequence" refers to any other frame of the sequence except the frame containing said pixel to be predicted. For example, for a video sequence, the "other frame of the sequence" can be a frame temporarily neighboring the frame containing the pixel to be predicted, i.e. a preceding frame or a succeeding frame of the frame containing the pixel to be predicted. As another example, for a multi-view shot, the "other frame of the sequence" is another frame belonging to the same shot.

The term "a plurality of pixels of a frame" refers to some or all pixels of the frame, for example a block of pixels. The term "at least some pixels of the plurality of pixels" refers to a subset of the plurality of pixels for which prediction values are generated. In an embodiment this will be the whole plurality of pixels. However, for example since depending on the chosen prediction mode decision criterion the corresponding mode evaluation result may not be determined for all pixels of the plurality of pixels, in another embodiment the term refers to less than all pixels of the plurality of pixels.

The plurality of other pixels of the frame, spatially neighboring the pixel to be predicted, can but does not necessarily need to contain all pixels spatially neighboring said pixel.

Further, the term "a value or values of one or more pixels" refers to a value of the pixel for the case of one pixel, and refers to values of the pixels for the case of more than one pixel.

The approach according to the aspects of the invention extends the intra-prediction of still-picture compression algorithms like JPEG with a per pixel inter-prediction mode for pixels where the intra-prediction may be unsuitable, e.g. where a temporal prediction using the pixel located at the same or a motion compensated position in the previous or following frame results in a better performance.

The provided approach at least has the effect that for image sequences the compression gain is improved compared to compression schemes based on pure intra-prediction, such as Motion JPEG, while the complexity and latency of the codec remain low compared to inter-frame prediction schemes, which are used, e.g., for video coding according to MPEG-2 standard and inter-/intra prediction according to, e.g., H.264 and HEVC standards.

For encoding, in one embodiment prediction values directly refer to prediction errors or residuals, i.e. differences between the predicted values and the originally observed values, whereas in another embodiment prediction residuals could be calculated from the generated prediction values.

An encoder and a decoder both applying the presented method or using or containing the described apparatus will be able to generate the same prediction values independently of each other without transmission of the individual mode evaluation results for the pixels, if the used prediction mode decision criterion is made available at encoder and decoder side.

Although another approach of using per pixel intra-/inter mode selection for encoding and decoding is to check at the encoder for every pixel if intra- or inter-prediction results in a smaller prediction error and flag each pixel at the encoder as intra- or inter-predicted accordingly, the described approach may enable a higher compression gain, as it can be avoided that for each pixel the additional information has to be transmitted or stored, which otherwise could result in a reduced or even negative compression gain. In other words, the bits saved due to a better prediction would otherwise be spent on the information required for transmitting or storing the prediction mode.

Therefore, the prediction mode decision criterion is chosen such that the mode decision result is calculable depending on the values of the plurality of other pixels spatially neighboring said pixel, wherein said plurality of other pixels to be used for evaluating the prediction mode decision criterion is chosen such that they are available, i.e. stored, transmitted or decoded before the pixel for which the prediction value is to be determined. This allows recalculation of the encoder's mode decision result for the pixel at the decoder, if only the prediction mode decision criterion is known or communicated between encoder and decoder.

In one embodiment the corresponding prediction value for said pixel

- is generated from said value or values of said one or more pixels of at least one other frame of the sequence, if no edge is detectable by evaluating the plurality of other pixels spatially neighboring said pixel, and
- is generated from the values of the plurality of other pixels spatially neighboring said pixel otherwise.

In other words, the prediction mode decision criterion is whether there is no edge detectable within the plurality of other pixels of the frame, spatially neighboring said pixel. If the mode evaluation result indicates that the criterion is met, inter-prediction is applied.

Correspondingly, as an example, referring again to values of pixels A, B and C and X shown in Fig. 1, Eq. 1 can be changed to

$$X = \begin{cases} \min(A, B) \, if \, C \geq \max(A, B) \\ \max(A, B) \, if \, C \leq \min(A, B) \\ inter - prediction \, otherwise \end{cases} \qquad \text{Eq. 2}$$

If neither $C \geq \max(A,B)$ nor $C \leq \min(A,B)$ is found to be true, inter-prediction is applied, whereas otherwise X is generated as min(A,B) or max(A,B), respectively. The decision how to predict the value of X from the values of A, B and C taken at an encoder side does not have to be encoded, stored or transmitted to the decoder side. Instead, the decoder can recalculate it based on available A, B and C values.

In another embodiment the corresponding prediction value for said pixel

- is generated from said value or values of said one or more pixels of at least one other frame of the sequence, if pixel values of the plurality of other pixels spatially neighboring said pixel differ from each other by at least one defined threshold value, and
- is generated from the values of the plurality of other pixels spatially neighboring said pixel otherwise.

For example, the at least one threshold value may be a predefined value known at an encoding and a decoding side. As another example, the at least one threshold value can be content dependent and may be set or calculated at the encoder side, e.g. for the frame or for the block, i.e. plurality of pixels, and transmitted to the decoder side accordingly, i.e. on a frame or block basis.

Correspondingly, as an example, again referring to values of pixels $A$, $B$ and $C$ and $X$ shown in Fig. 1, if the values of $A$, $B$, and $C$ are all quite different, i.e. if

$$|A - B| > T1 \ and \ |A - C| > T2 \ and \ |C - B| > T3 \qquad \text{Eq. 3}$$

is found to be true, wherein $T1$, $T2$ and $T3$ refer to threshold values delimiting similarity acceptance ranges, inter-frame prediction is applied, whereas otherwise the prediction value for $X$ is generated by intra-frame prediction, e.g. again as min($A,B$) or max($A,B$), respectively, or as a difference or average value. $T1$, $T2$ and $T3$ may be identical or different and may be determined, for example, based on a content of the block or plurality of pixels, the at least some pixels, the frame or the sequence of image frames.

In yet another embodiment the corresponding prediction value for said pixel

- is generated from said value or values of said one or more pixels of at least one other frame of the sequence, if a variance of the values of the plurality of other pixels spatially neighboring said pixel is above a defined threshold value, and
- is generated from the values of the plurality of other pixels spatially neighboring said pixel otherwise.

Correspondingly, as an example, again referring to values of pixels $A$, $B$ and C and $X$ shown in Fig. 1, if the variance of the values of $A$, $B$ and C exceeds a threshold value $T$, i.e. if

$$((A - \mu)^2 + (B - \mu)^2 + (C - \mu)^2) > T \qquad \text{Eq. 4}$$

wherein

$$\mu = (A + B + C)/3 \qquad \text{Eq. 5}$$

is found to be true, wherein $T$ refers to the threshold value, inter-frame prediction is applied, whereas otherwise $X$ is generated by intra-frame prediction, e.g. again as min($A,B$) or max($A,B$), respectively, or as a difference or average value. In other words, if the condition given in Eq. 4 is true, the corresponding pixel value of $X$ will be inter-predicted, otherwise intra-predicted. $T$ can be a content dependent value set at the encoder and transmitted to the decoder on a frame or block basis.

If the method or apparatus are applied to the encoding side, in an embodiment the prediction mode decision criterion is selected from a plurality of different prediction mode decision criteria depending on a content of at least one of said sequence of image frames, said frame, said plurality of pixels and said at least some pixels. In other words, a set of different prediction mode decision criteria, such as those described above by means of example, is available and the prediction mode decision criterion to be applied is selected depending on the content of the actual block or plurality of pixels, the at least some pixels, the frame or the sequence of image frames. This improves the compression gain. In another embodiment the selection of the prediction mode decision criterion can be based on other criteria, such as empirical values previously determined for a particular type of content.

Still referring to the embodiment where the method or apparatus are applied to the encoding side, in an example an identifier is associated with the plurality of pixels identifying the selected prediction mode decision criterion. If the generated prediction values or prediction residuals determined from the prediction values are encoded, e.g. sequentially, in a bitstream, the term "associated with the plurality of pixels" refers to encoding and storing or transmitting the identifier together with the encoded values, i.e. placed together in a common bitstream.

For example, the identifier identifying the chosen criterion will be transmitted to the decoder. In an example embodiment, encoding an identifier that identifies one of the abovementioned examples of prediction mode decision criteria with respect to Eq. 1 to Eq. 4, a code of only 2 bits is used is per unit for which the prediction mode decision criterion has been determined, e.g. per plurality of pixels, block or frame, as shown in the following Table 1:

(Table 1)

| Code | Mode | Decision based on |
|---|---|---|
| 00 | Intra-prediction | Eq. 1 |
| 01 | Intra-/inter-prediction | Eq. 2 |
| 10 | Intra-/inter-prediction | Eq. 3 |
| 11 | Intra-/inter-prediction | Eq. 4 + Eq. 5 |

For example, for a video sequence the lossless compression strength achieved using an encoder applying the described prediction scheme may be above those of an encoder applying compression according to lossless Motion JPEG, for example better than 2, e.g. better than 3.5.

If the method or apparatus are applied to the decoding side, in an embodiment the prediction mode decision criterion is selected from a plurality of different prediction mode decision criteria based on an identifier associated with the plurality of pixels, wherein the identifier identifies the same prediction mode decision criterion selected at the encoding side.

While not explicitly described, the present embodiments may be employed in any combination or sub-combination.

Embodiments explicitly dedicated to the encoding side and explicitly to the decoding side may only be employed in combination in an apparatus, system or codec comprising an encoding side and also a decoding side.

## BRIEF DESCRIPTION OF THE DRAWINGS

Fig. 1     schematically illustrates pixels *A, B* and *C* used for prediction of pixel *X*, e.g. according to JPEG-LS intra-frame prediction;

Fig. 2     schematically illustrates a method for generating corresponding prediction values for at least some pixels of a plurality of pixels of a frame of a sequence of image frames according to an embodiment of the invention;

Fig. 3     schematically illustrates a method for generating corresponding prediction values for at least some pixels of a plurality of pixels of a frame of a sequence of image frames according to another embodiment of the invention;

Fig. 4     schematically illustrates an apparatus for generating corresponding prediction values for at least some pixels of a plurality of pixels of a frame of a sequence of image frames according to an embodiment of the invention; and

Fig. 5     schematically illustrates an apparatus for generating corresponding prediction values for at least some pixels of a plurality of pixels of a frame of a sequence of image frames according to another embodiment of the invention.

## DETAILED DESCRIPTION OF EMBODIMENTS

For a better understanding, the invention will now be explained in more detail in the following description with reference to the drawings. It is understood that the invention is not limited to these exemplary embodiments and that specified features can also expediently be combined and/or modified without departing from the scope of the present invention as defined in the appended claims.

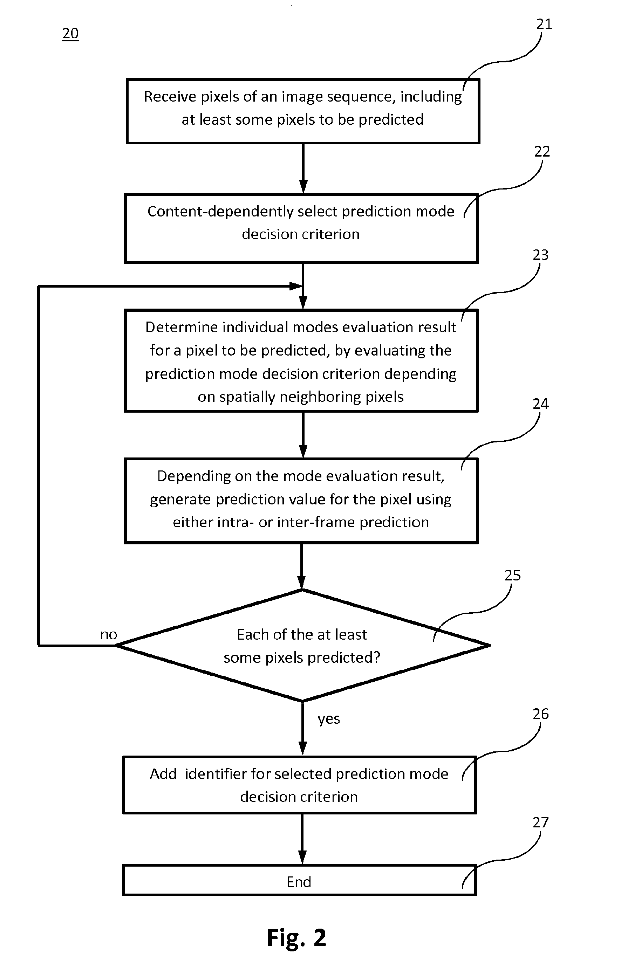

Referring to Fig. 2, a method 20 for generating corresponding prediction values for at least some pixels of a plurality of pixels of a frame of a sequence of image frames according to an embodiment of the invention is schematically illustrated. The method is suitable for selectively generating intra-/inter-frame prediction values of pixels of a frame of a sequence of digital image frames.

In the shown embodiment of the method 20, in a first step 21 pixels of frames of a sequence of image frames are received, wherein at least some pixels of a plurality of pixels of a frame of the sequence are to be predicted.

The embodiment of the method shown in Fig. 2 may, for example, be applied at an encoding side of a video encoding/decoding system. Therefore, in a second step 22 a prediction mode decision criterion to be applied is selected from a plurality of different prediction mode decision criteria depending on a result of an evaluation of the content of, for example, the received plurality of pixels or the whole frame or a plurality of frames of the image sequence.

Then, each of the at least some pixels is processed according to a third step 23 and a fourth step 24.

In the third step 23 a corresponding individual mode evaluation result is determined individually for a pixel by evaluating the prediction mode decision criterion depending on a plurality of other pixels of the frame, which are spatially neighboring said pixel. In the shown embodiment the prediction mode decision criterion is selected from a plurality of different prediction mode decision criteria after evaluating a content of, e.g., the plurality of pixels. In another embodiment the applied prediction mode decision criterion is pre-selected and no second step 22 is used.

In the fourth step 24 a corresponding prediction value for said pixel is generated, depending on the mode evaluation result determined individually for said pixel, either from values of said plurality of other pixels of the frame, which are spatially neighboring said pixel or from a value or values of one or more pixels of at least one other frame of the sequence. The generated prediction value may, for example, be stored or further processed to generate and encode a prediction residual for the corresponding pixel.

Then it is checked 25 whether or not each of the at least some pixels has been predicted.

The third step 23 and the fourth step 24 are repeated for a next pixel of the at least some pixels, if not each of the at least some pixels has been processed. In another embodiment the pixels are not processed sequentially one by one in a loop but, for example, in parallel.

Once each of the at least some pixels has been processed, the processing continues. In the shown embodiment an identifier identifying the selected prediction mode decision criterion is associated 26 with the plurality of pixels. In an example embodiment this includes encoding the identifier together with the generated prediction values or prediction residuals generated from the prediction values and the corresponding original pixel values in a common bitstream. However, in another example embodiment the identifiers are stored or transmitted to the decoder side separately.

Then the processing ends 27. It should be noted that this does not necessarily end the overall processing. Instead, for example, the processing may continue with a next block or plurality of pixels of the frame or with a next frame of the image sequence.

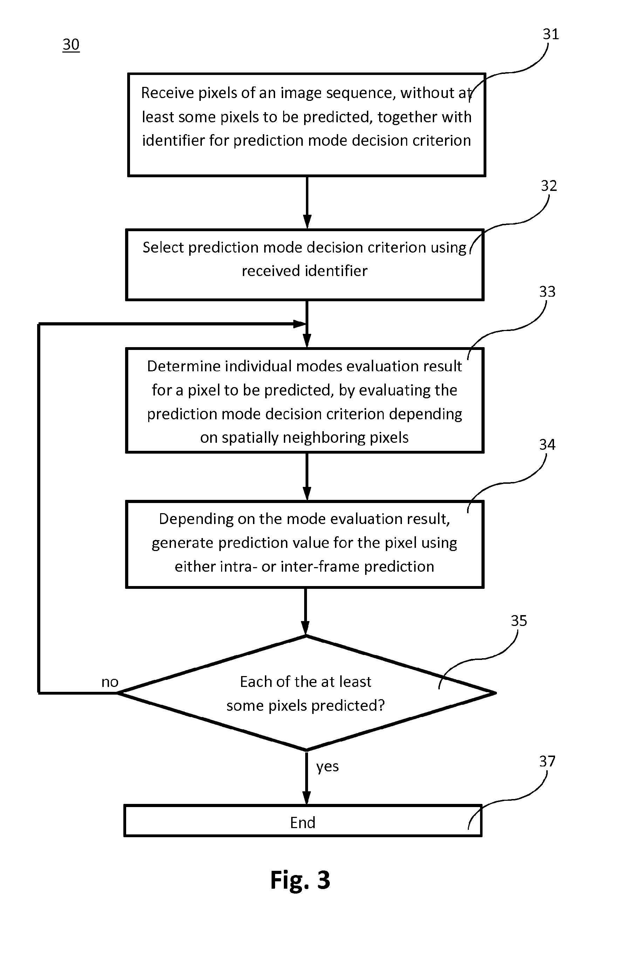

Referring now to Fig. 3, a method 30 for generating corresponding prediction values for at least some pixels of a plurality of pixels of a frame of a sequence of image frames according to another embodiment of the invention is schematically illustrated.

In the shown embodiment of the method, in a first step 31 pixels of a sequence of image frames are received, wherein a plurality of pixels of a frame of the sequence is received together with an associated identifier for the prediction mode decision criterion to be used, but without at least some pixels of the plurality of pixels of the frame of the sequence that require to be predicted. The shown embodiment is similar to those shown in Fig. 2. However, it is intended to be applied at a decoding side of a video encoding/decoding system. Therefore, the values of the pixels received in step 31 may, for example, be (already) decoded, i.e. reconstructed pixel values, whereas the values of the at least some pixels to be predicted are not available, which includes that prediction residuals for these pixels are available and will be used to reconstruct the original pixel value after the corresponding prediction value has been generated.

In a second step 32 the prediction mode decision criterion to be applied is selected from the plurality of different prediction mode decision criteria based on an evaluation of an identifier associated with the plurality of pixels.

Then, each of the at least some pixels is processed according to a third step 33 and a fourth step 34.

In the third step 33 a corresponding individual mode evaluation result is determined individually for a pixel by evaluating the prediction mode decision criterion depending on a plurality of other pixels spatially neighboring said pixel.

In the fourth step 34 a corresponding prediction value for said pixel is generated, depending on the mode evaluation result determined individually for said pixel, either from values of said plurality of other pixels spatially neighboring said pixel or from a value or values of one or more pixels of at least one other frame of the sequence. The generated prediction value may, for example, be stored or further processed to generate and encode a prediction residual for the corresponding pixel.

Then it is checked 35 whether or not each of the at least some pixels has been predicted.

If not each of the at least some pixels has been predicted, the third step 33 and the fourth step 34 are repeated for a next pixel of the at least some pixels. In another embodiment the pixels are not processed sequentially one by one in a loop but, for example, in parallel.

If each of the at least some pixels has been predicted, the processing ends 36. Again, it should be noted that this does not necessarily end the overall processing. Instead, for example, the processing may continue with a next block or plurality of pixels of the frame or with a next frame of the image sequence.

Referring now to Fig. 4 and Fig. 5, apparatuses for generating corresponding prediction values for at least some pixels of a plurality of pixels of a frame of a sequence of image frames according to embodiments of the invention are schematically shown. The apparatus shown in Fig. 4 and the apparatus shown in Fig. 5 allow implementing the advantages and characteristics of the described method as part of an apparatus for generating corresponding prediction values for at least some pixels of a plurality of pixels of a frame of a sequence of image frames.

The apparatus 40 shown in Fig. 4 comprises an input 41 configured to receive a plurality of pixels of a sequence of image frames.

The apparatus 40 according to the embodiment shown in Fig. 4 comprises a selection unit 42, connected to a prediction mode determination unit 43, and configured to select a prediction mode decision criterion. On an encoding side of an encoding/decoding system where a plurality of different prediction mode decision criteria are available, the selection unit selects the criterion, e.g., depending on the content of the plurality of pixels or of the whole frame or of the image sequence. On the decoding side of an encoding/decoding system where the prediction mode decision criterion is identified by an identifier associated with the plurality of pixels, the selection unit selects the prediction mode decision criterion from a plurality of stored or previously received decision criteria based on an evaluation of the associated identifier.

The prediction mode determination unit 43 is configured to, for each of the at least some pixels, determine individually for a pixel a corresponding individual mode evaluation result by evaluating a prediction mode decision criterion depending on a plurality of other pixels of the frame, spatially neighboring said pixel.

A prediction value generating unit 44 is connected to the prediction mode determination unit 43 to receive, for each of the at least some pixels, the mode evaluation result determined individually for said pixel from the prediction mode determination unit 43. The prediction value generating unit 44 is configured to generate a corresponding prediction value for said pixel, depending on the mode evaluation result determined individually for said pixel, either from values of said plurality of other pixels spatially neighboring said pixel or from a value or values of one or more pixels of at least one other frame of the sequence.

The apparatus 40 according to the embodiment shown in Fig. 4 further comprises at least one memory 45 arranged to at least temporarily store or buffer at least parts of frames of the image sequence, as well as, e.g., values calculated during the processing. In another embodiment, the apparatus 40 does not comprise the memory 45 but is connected or connectable to the memory by means of an interface.

In the embodiment shown in Fig. 4 the selection unit 42, the prediction mode determination unit 43, the prediction value generating unit 44 and the memory 45 directly communicate with each other. In another embodiment the apparatus comprises a controller unit connected to at least one of the prediction mode determination unit 43 and the prediction value generating unit 44, and configured to control the communication.

In the shown embodiment the memory 45 is connected to the selection unit 42, the prediction mode determination unit 43 and the prediction value generating unit 44. In other embodiments some all of the units are indirectly connected to the memory 45 or the memory is provided as a plurality of separate memory devices.

Units comprised in the embodiment of the apparatus shown in Fig. 4 may, for example, be provided as separate devices, jointly as at least one device or logic circuitry, or functionality carried out by a microprocessor, microcontroller or other processing device, computer or other programmable apparatus.

As shown in Fig. 5, according to an embodiment of the invention an apparatus 50 for generating corresponding prediction values for at least some pixels of a plurality of pixels of a frame of a sequence of image frames comprises a processing device 51 and a memory device 52 storing instructions that, when executed, cause the apparatus to perform steps according to one of the described methods.

For example, the processing device can be a processor adapted to perform the steps according to one of the described methods. In an embodiment said adaptation comprises that the processor is configured, i.e. for example programmed, to perform steps according to one of the described methods.

In an embodiment, the apparatus 40 or 50 is a device being part of another apparatus or system, such as, for example, a video encoder, a video decoder, a video archival system or a video transmission system.

As will be appreciated by one skilled in the art, aspects of the present principles can be embodied as an apparatus, a system, method or computer readable medium. Accordingly, aspects of the present principles can take the form of a hardware embodiment, a software embodiment or an embodiment combining software and hardware aspects. Furthermore, aspects of the present principles can take the form of a computer readable storage medium. Any combination of one or more computer readable storage medium(s) may be utilized.

Aspects of the present principles may, for example, at least partly be implemented in a computer program comprising code portions for performing steps of the method according to an embodiment of the invention when run on a programmable apparatus or enabling a programmable apparatus to perform functions of an apparatus or system according to an embodiment of the invention.

Further, any shown connection may be a direct or an indirect connection. Furthermore, those skilled in the art will recognize that the boundaries between logic blocks are merely illustrative and that alternative embodiments may merge logic blocks or impose an alternate decomposition of functionality upon various logic blocks.

**Claims**

1. Method (20, 30) for generating corresponding prediction values for at least some pixels of a plurality of pixels of a frame of a sequence of image frames, **comprising** for each of the at least some pixels,

   - determining (23, 33) individually for a pixel a corresponding individual mode evaluation result by evaluating a prediction mode decision criterion depending on a plurality of other pixels of the frame, spatially neighboring said pixel, and
   - depending on the mode evaluation result determined individually for said pixel, generating (24, 34) a corresponding prediction value for said pixel either from values of said plurality of other pixels spatially neighboring said pixel or from a value or values of one or more pixels of at least one other frame of the sequence.

2. Method according to claim 1, **wherein** the corresponding prediction value for said pixel

   - is generated from said value or values of said one or more pixels of at least one other frame of the sequence, if no edge is detectable by evaluating the plurality of other pixels spatially neighboring said pixel, and
   - is generated from the values of the plurality of other pixels spatially neighboring said pixel otherwise.

3. Method according to claim 1, **wherein** the corresponding prediction value for said pixel

   - is generated from said value or values of said one or more pixels of at least one other frame of the sequence, if pixel values of the plurality of other pixels spatially neighboring said pixel differ from each other by at least one defined threshold value, and
   - is generated from the values of the plurality of other pixels spatially neighboring said pixel otherwise.

4. Method according to claim 1, **wherein** the corresponding prediction value for said pixel

   - is generated from said value or values of said one or more pixels of at least one other frame of the sequence, if a variance of the values of the plurality of other pixels spatially neighboring said pixel is above a defined threshold value, and
   - is generated from the values of the plurality of other pixels spatially neighboring said pixel otherwise.

5. Method according to one of the preceding claims, **comprising**

   - selecting (22) said prediction mode decision criterion from a plurality of different prediction mode decision criteria depending on a content of at least one of said sequence of image frames, said frame, said plurality of pixels and said at least some pixels.

6. Method according to claim 5, **comprising**

   - associating (26) an identifier with the plurality of pixels identifying the selected prediction mode decision criterion.

7. Method according to one of claims 1 to 4, **comprising**

   - selecting (32) said prediction mode decision criterion from a plurality of different prediction mode decision criteria based on an identifier associated with the plurality of pixels.

8. Apparatus (40) for generating corresponding prediction values for at least some pixels of a plurality of pixels of a frame of a sequence of image frames, **comprising**

   - a prediction mode determination unit (43) configured to, for each of the at least some pixels,

     - determine individually for a pixel a corresponding individual mode evaluation result by evaluating a prediction mode decision criterion depending on a plurality of other pixels of the frame, spatially neighboring said pixel; and

   - a prediction value generating unit (44) connected to receive, for each of the at least some pixels, the mode evaluation result determined individually for said pixel from the prediction mode determination unit and configured to,

- depending on the mode evaluation result determined individually for said pixel, generate a corresponding prediction value for said pixel either from values of said plurality of other pixels spatially neighboring said pixel or from a value or values of one or more pixels of at least one other frame of the sequence.

9. Apparatus according to claim 8, **wherein** the prediction value generating unit (44) is configured to generate the corresponding prediction value for said pixel

- from said value or values of said one or more pixels of at least one other frame of the sequence, if no edge is detectable by evaluating the plurality of other pixels spatially neighboring said pixel, and
- from the values of the plurality of other pixels spatially neighboring said pixel otherwise.

10. Apparatus according to claim 8, **wherein** the prediction value generating unit (44) is configured to generate the corresponding prediction value for said pixel

- from said value or values of said one or more pixels of at least one other frame of the sequence, if pixel values of the plurality of other pixels spatially neighboring said pixel differ from each other by at least a defined threshold value, and
- from the values of the plurality of other pixels spatially neighboring said pixel otherwise.

11. Apparatus according to claim 8, **wherein** the prediction value generating unit (44) is configured to generate the corresponding prediction value for said pixel

- from said value or values of said one or more pixels of at least one other frame of the sequence, if a variance of the values of the plurality of other pixels spatially neighboring said pixel is above a defined threshold value, and
- from the values of the plurality of other pixels spatially neighboring said pixel otherwise.

12. Apparatus according to one of claims 8 to 11, **comprising**

- a selection unit connected to the prediction mode decision unit and configured to select said prediction mode decision criterion from a plurality of different prediction mode decision criteria depending on a content of at least one of said sequence of image frames, said frame, said plurality of pixels and said at least some pixels.

13. Apparatus according to claim 12, **wherein** the selection unit is configured to associate an identifier with the plurality of pixels identifying the selected prediction mode decision criterion.

14. Apparatus according to one of claims 8 to 11, **comprising**

- a selection unit connected to the prediction mode decision unit and configured to select said prediction mode decision criterion from a plurality of different prediction mode decision criteria based on an identifier associated with the plurality of pixels.

15. Apparatus (50) for generating corresponding prediction values for at least some pixels of a plurality of pixels of a frame of a sequence of image frames, **comprising**

- a processing device (51) and
- a memory device (52) storing instructions that, when executed, cause the apparatus to perform a method according to one of claims 1 to 7.

16. Computer readable storage medium having stored therein instructions enabling generation of corresponding prediction values for at least some pixels of a plurality of pixels of a frame of a sequence of image frames which, when executed by a computer, cause the computer to:

for each of the at least some pixels,

- determine (23, 33) individually for a pixel a corresponding individual mode evaluation result by evaluating a prediction mode decision criterion depending on a plurality of other pixels of the frame, spatially neighboring said pixel, and

- depending on the mode evaluation result determined individually for said pixel, generate (24, 34) a corresponding prediction value for said pixel either from values of said plurality of other pixels spatially neighboring said pixel or from a value or values of one or more pixels of at least one other frame of the sequence.

C  B
●  ●
A●  ●X    **Fig. 1**

**Fig. 4**

41

40    45    42

Selection unit

43

Memory

Prediction mode
determination unit

44

Prediction value
generating unit

52    50    51

Memory    Processor    **Fig. 5**

Fig. 2

30

31

Receive pixels of an image sequence, without at least some pixels to be predicted, together with identifier for prediction mode decision criterion

32

Select prediction mode decision criterion using received identifier

33

Determine individual modes evaluation result for a pixel to be predicted, by evaluating the prediction mode decision criterion depending on spatially neighboring pixels

34

Depending on the mode evaluation result, generate prediction value for the pixel using either intra- or inter-frame prediction

35

no ◁ Each of the at least some pixels predicted?

yes

37

End

**Fig. 3**

Europäisches
Patentamt

European
Patent Office

Office européen
des brevets

# EUROPEAN SEARCH REPORT

**Application Number**

EP 14 30 6765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAKACHI T ET AL: "A study on multiresolution lossless video coding using inter/intra frame adaptive prediction", VISUAL COMMUNICATIONS AND IMAGE PROCESSING; 8-7-2003 - 11-7-2003; LUGANO,, 8 July 2003 (2003-07-08), XP030080786, * abstract * * figures 4, 5 * * paragraph [02.3] * | 1-16 | INV. H04N19/107 H04N19/136 H04N19/182 |
| X | JUNG-HAK NAM ET AL: "Lossless Video Coding of Modified H.264 Based on Pixel-wise Prediction", 25. PICTURE CODING SYMPOSIUM;24-4-2006 - 26-4-2006; BEIJING,, 24 April 2006 (2006-04-24), XP030080239, * abstract * * figures 2, 3 * * paragraph [0002] * | 1-16 | |
| X | WO 2007/139266 A1 (KOREA ELECTRONICS TELECOMM [KR]; KWANGWOON UNIVERSITY RES INST [KR]; S) 6 December 2007 (2007-12-06) * figures 2-5, 7, 9 * * page 2, paragraph 2 - page 5, paragraph 3 * * page 7, paragraph 3 - page 12, paragraph 5 * | 1-16 | TECHNICAL FIELDS SEARCHED (IPC) H04N |
| A | US 2001/016006 A1 (KADONO SHINYA [JP]) 23 August 2001 (2001-08-23) * the whole document * | 1-16 | |

-/--

The present search report has been drawn up for all claims

| Place of search | Date of completion of the search | Examiner |
|---|---|---|
| Munich | 24 April 2015 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.........................................................................
& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 14 30 6765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MARCELO J WEINBERGER ET AL: "The LOCO-I Lossless Image Compression Algorithm: Principles and Standardization into JPEG-LS", IEEE TRANSACTIONS ON IMAGE PROCESSING, IEEE SERVICE CENTER, PISCATAWAY, NJ, US, vol. 9, no. 8, 1 August 2000 (2000-08-01), XP011025643, ISSN: 1057-7149, DOI: 10.1109/83.855427 * the whole document * | 1-16 | |

-----

TECHNICAL FIELDS
SEARCHED (IPC)

The present search report has been drawn up for all claims

| Place of search | Date of completion of the search | Examiner |
|---|---|---|
| Munich | 24 April 2015 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6765

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2015

| Patent document cited in search report | Publication date | Patent family member(s) | Publication date |
|---|---|---|---|
| WO 2007139266 A1 | 06-12-2007 | US 2009161759 A1 | 25-06-2009 |
| | | WO 2007139266 A1 | 06-12-2007 |
| US 2001016006 A1 | 23-08-2001 | BR 9702270 A | 20-07-1999 |
| | | CA 2227062 A1 | 27-11-1997 |
| | | CN 1196856 A | 21-10-1998 |
| | | CN 1344113 A | 10-04-2002 |
| | | CN 1344114 A | 10-04-2002 |
| | | CN 1348313 A | 08-05-2002 |
| | | CN 1348314 A | 08-05-2002 |
| | | CN 1361632 A | 31-07-2002 |
| | | DE 69718749 D1 | 06-03-2003 |
| | | DE 69718749 T2 | 16-10-2003 |
| | | DE 69718834 D1 | 06-03-2003 |
| | | DE 69718834 T2 | 13-11-2003 |
| | | DE 69718951 D1 | 13-03-2003 |
| | | DE 69718951 T2 | 02-10-2003 |
| | | DE 69724672 D1 | 09-10-2003 |
| | | DE 69724672 T2 | 15-07-2004 |
| | | DE 69724673 D1 | 09-10-2003 |
| | | DE 69724673 T2 | 15-07-2004 |
| | | EP 0840510 A1 | 06-05-1998 |
| | | EP 1120969 A2 | 01-08-2001 |
| | | EP 1120970 A2 | 01-08-2001 |
| | | EP 1120971 A2 | 01-08-2001 |
| | | EP 1120972 A2 | 01-08-2001 |
| | | EP 1120975 A2 | 01-08-2001 |
| | | ES 2190995 T3 | 01-09-2003 |
| | | ES 2191177 T3 | 01-09-2003 |
| | | ES 2192548 T3 | 16-10-2003 |
| | | ES 2206358 T3 | 16-05-2004 |
| | | ES 2206359 T3 | 16-05-2004 |
| | | ID 17349 A | 24-12-1997 |
| | | JP 3214705 B2 | 02-10-2001 |
| | | KR 100266345 B1 | 15-09-2000 |
| | | US 6188796 B1 | 13-02-2001 |
| | | US 6516095 B1 | 04-02-2003 |
| | | US 6560372 B1 | 06-05-2003 |
| | | US 2001001019 A1 | 10-05-2001 |
| | | US 2001016006 A1 | 23-08-2001 |
| | | US 2002041715 A1 | 11-04-2002 |
| | | WO 9744956 A1 | 27-11-1997 |

EPO FORM P0459

For more details about this annex : see Official Journal of the European Patent Office, No. 12/82